# EUROPÄISCHE PATENTSCHRIFT

(11) **EP 3 150 868 B1**
(45) Veröffentlichungstag und Bekanntmachung des Hinweises auf die Patenterteilung: **13.09.2017**
(21) Anmeldenummer: 15187980.6
(22) Anmeldetag: 01.10.2015
(51) Int. Cl.: F16B 31/02

(54) **VORRICHTUNG ZUR KONTROLLE VON SCHRAUBVERBINDUNGEN**
DEVICE FOR CONTROLLING OF SCREWED CONNECTIONS
DISPOSITIF DESTINE AU CONTROLE D'ASSEMBLAGES PAR VIS

(43) Veröffentlichungstag der Anmeldung: 05.04.2017
(73) Patentinhaber: Volborth, Thomas, 58553 Halver (DE)
(72) Erfinder: Volborth, Thomas, 58553 Halver (DE)
(74) Vertreter: Patentanwälte Dörner & Kötter PartG mbB

(56) Entgegenhaltungen:
- DE-A1- 19 831 372
- DE-A1-102007 027 218
- DE-A1-102009 047 396
- US-A- 2 850 937
- US-A- 4 483 648

## Beschreibung

Die Erfindung betrifft eine Vorrichtung zur Kontrolle von Schraubverbindungen nach dem Oberbegriff des Patentanspruchs 1. Die Erfindung betrifft weiterhin ein Verfahren zur Herstellung einer solchen Vorrichtung nach dem Patentanspruch 9. Schraubverbindungen sind in unterschiedlichsten Anwendungen bekannt. Sie dienen zur lösbaren Verbindung von mindestens zwei Teilen. Für die zuverlässige Befestigung der Teile ist eine ausreichende Axialkraft der Schraubverbindung erforderlich. Durch das beim Einschrauben auf die Schraube einwirkende Drehmoment wird über das Gewinde die Axialkraft bzw. Vorspannkraft bewirkt.

Insbesondere bei sicherheitsrelevanten Schraubverbindungen, wie sie beispielsweise im Kraftwerksbau, Fahrzeugbau, Bergbau und dergleichen Anwendung finden, ist die Kenntnis über die Zuverlässigkeit der erstellten Schraubverbindung von großer Bedeutung. Aus diesem Grund werden sicherheitsrelevante Verschraubungen üblicherweise mit Drehmomentschlüsseln hergestellt, um sicherzustellen, dass das für die jeweilige Schraubverbindung erforderliche Anzugsmoment aufgebracht wird. Da die Vorspannkraft nur durch aufwendige Messverfahren ermittelt werden könnte, wird hilfsweise das Anzugsmoment verwendet, das zur Erzielung der Schraubverbindung aufgebracht wird. Diese Art der Kontrolle ist zwar prinzipiell zuverlässig; hat allerdings die Einschränkung, dass das Anziehdrehmoment unter Beachtung von Reibbeiwerten nur eine Hilfsgröße ist, die sicherstellen soll, dass für die Schraubenverbindung die gewünschte Vorspannkraft aufgebracht wurde. Streuungen bzgl. der aus dem Anziehdrehmoment resultierenden Vorspannkraft ergeben sich u.a. durch die Ausführung und Qualität der Verbindungselemente bzgl. Gewindeform, Gewindegängigkeit etc. sowie die Toleranz des Messmittels (Drehmomentschlüssel) und der Streuung des Reibbeiwertes der Schraubenverbindungselemente. Insofern besteht durch die Verwendung der abgeleiteten Größe "Drehmoment" anstelle der gewünschten Größe "Vorspannkraft" ein erhebliches Streuungs-, bzw. Risikopotential. Sie bietet jedoch keine Möglichkeit, bei der nachträglichen Kontrolle der Schraubverbindung unmittelbar zu erkennen, ob bei der Erstellung der Schraubverbindung das erforderliche Anzugsmoment aufgebracht wurde.

Um eine solche Kontrolle zu ermöglichen sind verschiedene Lösungen aus dem Stand der Technik bekannt. So ist aus der DE 31 48 730 C2 eine Zwischenlegscheibeneinheit bekannt, bei der ein Messkörper zwischen zwei Scheiben vorgesehen ist, der von Kugeln mit unterschiedlichen Durchmessern gebildet ist, die in eine elastische Schicht eingebettet sind. Darüber hinaus bietet die DE 198 31 372 A1 eine Vorrichtung zur Kontrolle kraftschlüssiger Verbindungen an, bei der ein Messsystem mit zwei scheibenförmigen Bauteilen vorgesehen ist, welches eine Messschicht aus beispielsweise piezoelektrischem Material umfasst. Des Weiteren ist aus US 4,483,648 eine Scheibe bekannt, die einen abgewinkelten Abschnitt aufweist, der beim Anziehen der Mutter bzw. der Schraube durch diese kontinuierlich an das Bauteil angepresst wird. Ein ähnliches Prinzip ist in der US 6,152, 665 offenbart. Hier ist die Scheibe mit Einschnitten versehen, welche aufgewölbte Streifen begrenzen, die durch die Mutter bzw. die Schraube beim Anziehen kontinuierlich an das Bauteil angepresst werden. Dabei sind die Streifen derart bemessen, dass sie im angepressten Zustand über den Außendurchmesser der Scheibe hinausragen. Eine gattungsgemäße Vorrichtung ist in der US 2,850,937 beschrieben.

Die bekannten Vorrichtungen erfüllen zwar ihre Aufgabe; sie sind jedoch entweder konstruktiv aufwändig, weil sie eine relativ hohe Anzahl zusätzlicher Bauteile erfordern oder eine Versorgung der jeweiligen Vorrichtung mit elektrischer Energie erforderlich ist, oder ermöglichen keine mit dem bloßen Auge sichtbare Erkennung des Anliegens einer definierten Vorspannkraft (bzw. eines definierten Anzugsdrehmoments).

Hier will die Erfindung Abhilfe schaffen. Der Erfindung liegt die Aufgabe zu Grunde, eine Vorrichtung zur Kontrolle von Schraubverbindungen zu schaffen, die zuverlässig und mit bloßem Auge das Erreichen einer definierten Vorspannkraft anzeigt, einfach aufgebaut ist und rein mechanisch funktioniert. Gemäß der Erfindung wird diese Aufgabe durch die Merkmale des kennzeichnenden Teils des Patentanspruchs 1 gelöst.

Mit der Erfindung ist eine Vorrichtung zur Kontrolle von Schraubverbindungen geschaffen, die zuverlässig und mit bloßem Auge das Erreichen einer definierten Vorspannkraft anzeigt, einfach aufgebaut ist und rein mechanisch funktioniert. Durch den durch mechanische Vorspannung erzielten metastabilen Zustand des Anzeigeelements ist bewirkt, dass dieses bei Anliegen einer definierten auf die Vorrichtung einwirkenden Vorspannkraft eine signifikante, sprunghafte, mit bloßem Auge wahrnehmbare Verformung erfährt. Diese Art der Ausbildung beinhaltet den Vorteil, dass erst bei Erreichen des vorgegebenen Anzugsmoments eine Verformung des Anzeigeelements erfolgt. Auf diese Weise ist verhindert, dass bei einer lediglich annähernd ausreichenden Vorspannung, welche jedoch noch nicht dem konstruktionsseitig vorgegebenen Anzugsmoment entspricht, keine Veränderung des Anzeigeelements auftritt. Es ist damit gewährleistet, dass die erfindungsgemäße Vorrichtung erst beim Erreichen des vorgeschriebenen Anzugsmoments der Schraubverbindung, bzw. der definierten Vorspannung, eine Rückmeldung erteilt. Darüber hinaus ist das Auslösen des Übergangs vom metastabilen Zustand in den stabilen Zustand mit einem akustischen Geräusch verbunden, wodurch eine zusätzliche Wahrnehmung des Erreichens des definierten Anzugsdrehmoments gegeben ist.

Erfindungswesentlich ist das Vorsehen einer Vorspannung in der Unterlegscheibe, wodurch ein "Kraftreservoir" gebildet ist, das bei Erreichen der erforderlichen Vorspannkraft eine sprunghafte Verformung der Unterlegscheibe bzw. eines Bereichs der Unterlegscheibe ermöglicht (Übergang vom metastabilen in einen stabilen Zustand). An Stelle der im Stand der Technik bekannten kontinuierlichen Verformung eines Abschnitts, die mit dem bloßen Auge schwer wahrnehmbar ist und die das Erreichen eines bestimmten Anzugsmoments bzw. einer bestimmten Vorspannkraft nur unzureichend kennzeichnen kann, erfolgt hier eine sprunghafte, signifikante Veränderung eines ersten Zustands in einen zweiten, die eine unmittelbare Wahrnehmung des Erreichens einer definierten Vorspannkraft, die zur Auslösung des Übergangs vom metastabilen in den stabilen Zustand erforderlich ist, ermöglicht. Vorzugsweise ist die Unterlegscheibe aus einem Federstahl hergestellt.

Die Vorrichtung ist einteilig ausgebildet. Somit kommt die erfindungsgemäße Vorrichtung mit nur einem zusätzlichen Bauteil, nämlich der Unterlegscheibe, aus. Für den Fall, dass für die Schraubverbindung ohnehin eine Unterlegscheibe vorgesehen ist, ist die Anzahl der Bauteile sogar unverändert.

Dabei ist das Anzeigeelement durch einen radialen Abschnitt der Unterlegscheiben gebildet. Hierdurch ist ebenfalls eine gute optische Erfassung der sprunghaften Verformung erzielt. Bevorzugt weist der radiale Abschnitt zumindest bereichsweise eine reduzierte Materialstärke auf.

In einer Ausführungsform der Erfindung ist ein äußerer radialer Abschnitt gegenüber einem inneren radialen Abschnitt vorgespannt, der trichterförmig sich axial nach außen erstreckend ausgebildet ist. Hierdurch ist ein Hebelmechanismus bewirkt, der einen Wechsel eines metastabilen Zustands in einen stabilen Zustand durch die definierte Vorspannkraft auch bei größeren Materialdicken ermöglicht. In Ausgestaltung der Erfindung ist der äußere Rand des inneren radialen Abschnitts derart verprägt ausgebildet, dass sie eine nahezu ebene, horizontale Fläche aufweist. Hierdurch ist der zur Einleitung der sprunghaften Verformung erforderliche Weg reduziert.

In weiterer Ausgestaltung der Erfindung ist eine ebene, innere Ringfläche angeordnet, an die sich ein axial konisch aus der Ebene der inneren Ringfläche heraus erstreckender Kragen anschließt, der an den inneren Ringabschnitt angeformt ist, sodass durch den inneren Ringabschnitt und den Kragen eine ringförmig umlaufende Wölbung ausgebildet ist, die bevorzugt einen Querschnitt in Form eines auf dem Kopf stehenden V aufweist. Hierdurch ist eine seitliche Auslösung der sprunghaften Verformung des vorgespannten äußeren Bereichs durch einen an der umlaufenden Wölbung anliegenden Schraubenkopf bzw.

Mutternkörper ermöglicht, wodurch der axial für die Auslösung erforderliche Weg minimiert ist.

In weiterer Ausgestaltung der Erfindung ist auf einer Seite der Unterlegscheibe wenigstens eine bogenförmige, bevorzugt ringförmige Furche eingebracht, die zwischen zwei radialen Abschnitten verläuft. Hierdurch ist die sprunghafte Verformung des das Anzeigeelement ausbildenden äußeren Abschnitts unterstützt.

In vorteilhafter Ausgestaltung der Erfindung weist die Unterlegscheibe eine Dicke von ≤ 0,8 mm, bevorzugt ≤ 0,7 mm auf. Es hat sich gezeigt, dass hierdurch eine zuverlässige Auslösung des Übergangs vom metastabilen in den stabilen Zustand gewährleistet ist. Dabei wurden gute Ergebnisse bei der Herstellung der Unterlegscheiben aus einem Federstahl erzielt.

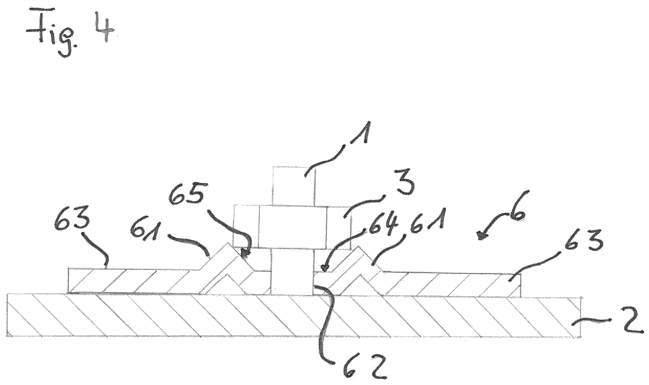

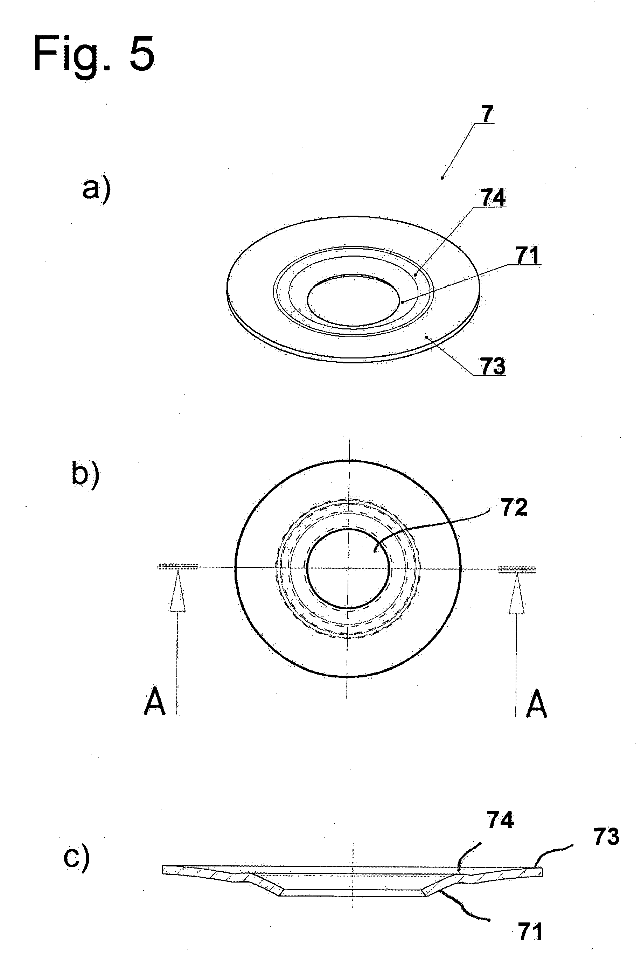

Der Erfindung liegt weiterhin die Aufgabe zu Grunde, ein Verfahren zur Herstellung einer Vorrichtung zur Kontrolle von Schraubverbindungen bereitzustellen, die zuverlässig das Erreichen einer definierten Vorspannkraft anzeigt, einfach aufgebaut ist und rein mechanisch funktioniert. Gemäß der Erfindung wird diese Aufgabe durch die Merkmale des Patentanspruchs 9 gelöst. (Die Gestaltung der Scheibe vor Aufbringen der axialen Kraft entspricht dem stabilen Zustand, wie er aus Figur 4 bzw. Figur 9 ersichtlich ist.) Durch Einwirkung der axialen Kraft nimmt die Unterlegscheibe einen metastabilen Zustand an, wie er in Figur 5 bzw. Figur 8 dargestellt ist. Durch das erfindungsgemäße Verfahren wird eine Unterlegscheibe in einen metastabilen Zustand versetzt, sodass sie bei Anliegen einer definierten Vorspannung durch ein definiertes Anzugsdrehmoment der Schraube bzw. der Mutter der Schraubverbindung in einem definierten Bereich eine sprunghafte, signifikante Verformung vollzieht, die mit dem bloßen Auge deutlich sichtbar ist.

In Weiterbildung der Erfindung weist der zweite trichterförmige Abschnitt wenigstens die doppelte, bevorzugt wenigstens die vierfache, besonders bevorzugt wenigstens die fünffache Breite des ersten trichterförmigen Abschnitts auf. Hierdurch ist eine deutlich sichtbare, sprunghafte Verformung beim Übergang vom metastabilen Zustand in den stabilen Zustand bewirkt.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1: die schematische Darstellung einer Schraubverbindung mit einer Kontrollvorrichtung in verspanntem Zustand;
- Figur 2: die schematische Darstellung der Schraubverbindung gemäß Figur 2 vor dem Anziehen der Mutter (nicht verspannter Zustand);
- Figur 3: die schematische Darstellung der Unterlegscheibe der Schraubverbindung aus Figur 2 in der Draufsicht;
- Figur 4: die schematische Darstellung einer Schraubverbindung mit einer Kontrollvorrichtung in einer weiteren Ausführungsform (nicht verspannter Zustand);
- Figur 5: die schematische Darstellung einer Unterlegscheibe für eine Schraubverbindung in einer dritten Ausführungsform (metastabiler, nicht verspannter Zustand)
a) in einer räumlichen Ansicht;
b) in der Draufsicht;
c) im Querschnitt A-A;
- Figur 6: die schematische Darstellung der Unterlegscheibe aus Figur 5 im stabilen, verspanntem Zustand
a) in einer räumlichen Ansicht;
b) in der Draufsicht;
c) im Querschnitt A-A.

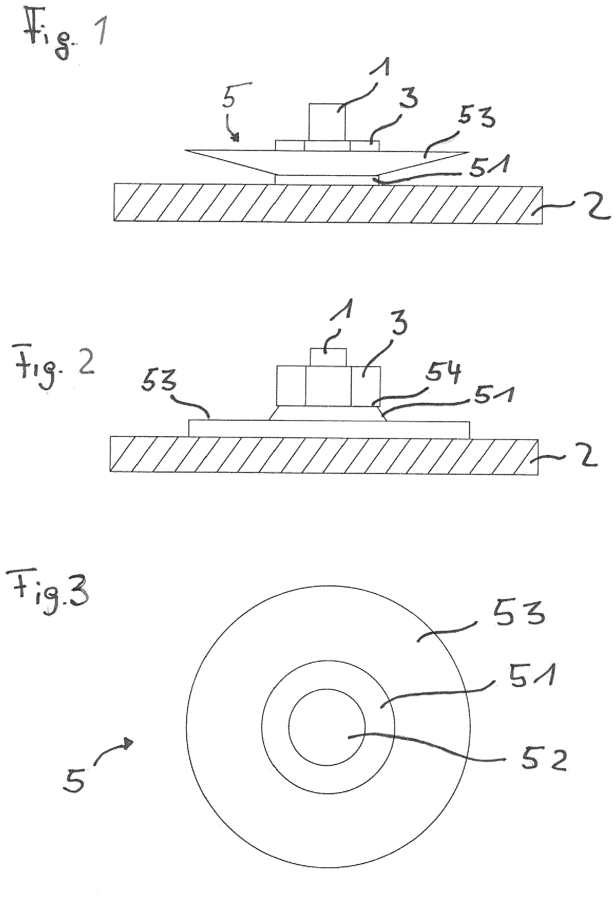

Im Ausführungsbeispiel gemäß Figur 1 ist eine Schraubverbindung dargestellt, umfassend einen Gewindebolzen 1, der aus einem angedeuteten Bauteil 2 herausragt. Auf das Gewinde des Gewindebolzens 1 ist eine Mutter 3 aufgeschraubt. Erkennbar ist zwischen dem Bauteil 2 und der Mutter 3 eine als Kontrollvorrichtung dienende Unterlegscheibe 5 angeordnet.

Die Unterlegscheibe 5 ist im Ausführungsbeispiel im Wesentlichen kreisringförmig ausgebildet, mit einem eine Durchführung 52 aufweisenden inneren Ringabschnitt 51 sowie einem äußeren Ringabschnitt 53. In diesem Ausführungsbeispiel ist das Anzeigeelement durch den äußeren Ringabschnitt gebildet.

Die Unterlegscheibe 5 ist vorgespannt ausgeführt, wodurch sie in einen metastabilen Zustand verbracht ist. In diesem Zustand bildet der äußere Ringabschnitt 53 eine ebene Ringfläche aus, aus welcher der innere Ringabschnitt 51 hohlkegelstumpfförmig herausragt. Im nicht verspannten Zustand der Schraubverbindung liegt die Mutter auf diesem hohlkegelstumpfförmig ausgebildeten inneren Ringabschnitt 51 auf (vgl. Figur 2). Im Ausführungsbeispiel ist der innere Ringabschnitt 51 an seinem der Mutter 3 zugewandten Rand 54 verprägt ausgeführt, sodass der Rand 54 in diesem kegelstumpfförmigen Zustand des inneren Ringabschnitts 51 eine ebene parallel zur Mutter 3 ausgebildete Anlagefläche ausbildet. Hierdurch ist der für die Auslösung der Unterlegscheibe zu überwindende axiale Weg der Mutter 3 reduziert.

Beim weiteren Einschrauben der Mutter wird der innere Ringabschnitt 51 in Richtung Bauteil 2 gepresst, bis dieser flächig auf dem Bauteil 2 aufliegt. Hierzu ist das vollständige Überwinden der Vorspannung der Unterlegscheibe 4 erforderlich. Durch das Überwinden der Vorspannung wird die Unterlegscheibe "ausgelöst", wodurch sie sprunghaft in den stabilen Zustand überführt wird. Hierbei nimmt der äußere Ringabschnitt 53 einen sich kegelförmig in Richtung der Mutter 3 erweiternden, diese kragenförmig umschließenden Zustand an (vgl. Figur 1). Dieser stabile Zustand bleibt ebenfalls bei einem späteren Lösen der Mutter erhalten, sodass bei dieser Ausführungsform der äußere Ringabschnitt 53 ein zuverlässiges Anzeigeelement ausbildet, welches mit dem bloßen Auge erkennbar anzeigt, ob die Mutter ursprünglich mit dem erforderlichen, definierten Drehmoment bzw. mit der definierten Vorspannkraft angezogen worden ist.

Im Ausführungsbeispiel gemäß Figur 4 ist die Kontrollvorrichtung durch eine Unterlegscheibe 6 in einer weiteren Ausführungsform gebildet. Dabei ist an dem inneren Ringabschnitt der Unterlegscheibe 6 eine zu diesem gespiegelte Fortführung angeformt, wodurch eine innen liegende, auf der Ebene des äußeren Ringabschnitts 63 angeordnete, eine Durchführung 62 aufweisende innere Ringfläche 64 gebildet ist, die über einen konisch sich nach außen erweiternden Kragen 65 mit dem Rand des inneren Ringabschnitts 61 verbunden ist. Die innere Ringfläche 64 ist dabei kleiner als der Umfang der Mutter 3 bemessen, sodass beim Anziehen der Mutter 3 ein Teil der Vorspannkraft auf den Kragen 65 einwirkt, über den letztendlich die zum Auslösen der Unterlegscheibe 6 erforderliche Kraft auf den inneren Ringabschnitt 61 eingeleitet wird. Diese Gestaltung ermöglicht die Realisierung einer erfindungsgemäßen Vorrichtung auch für sehr große erforderliche Anzugsdrehmomente, da lediglich ein Teil der Vorspannkraft als Auslösekraft in den inneren Ringabschnitt 61 eingeleitet wird.

Im Ausführungsbeispiel gemäß Figur 5 kommt bei der Schraubverbindung als Kontrollvorrichtung ebenfalls eine Unterlegscheibe 7 zum Einsatz, die einen eine Durchführung 72 aufweisenden inneren Ringabschnitt 71 aufweist, an den sich ein äußerer Ringabschnitt 73 anschließt. Auch in diesem Ausführungsbeispiel ist das Anzeigeelement durch den äußeren Ringabschnitt gebildet.

Die Unterlegscheibe 7 ist ebenfalls vorgespannt ausgeführt, wodurch sie in einen metastabilen Zustand verbracht ist. In diesem Zustand ist der innere Ringabschnitt 71 hohlkegelstumpfförmig von innen nach außen sich nach oben hin erweiternd ausgebildet und geht in den äußeren Ringabschnitt 73 über, der eine nach außen hin ansteigende Ringfläche ausbildet (Figur 5). Zwischen dem inneren Ringabschnitt 71 und dem äußeren Ringabschnitt 73 ist ein wellenförmiger Zwischenabschnitt 74 angeordnet, der einen Querschnitt in Form eines "liegenden S" aufweist. Dieser Zwischenabschnitt 74 verläuft zunächst entgegen der Steigung des inneren Ringabschnitts 71 und geht sodann über einen Wendepunkt in die Steigung des äußeren Ringabschnitts 73 über. Im nicht verspannten Zustand der Schraubverbindung liegt die (in Figur 5 nicht dargestellte) Mutter auf dem Zwischenabschnitt 74 auf.

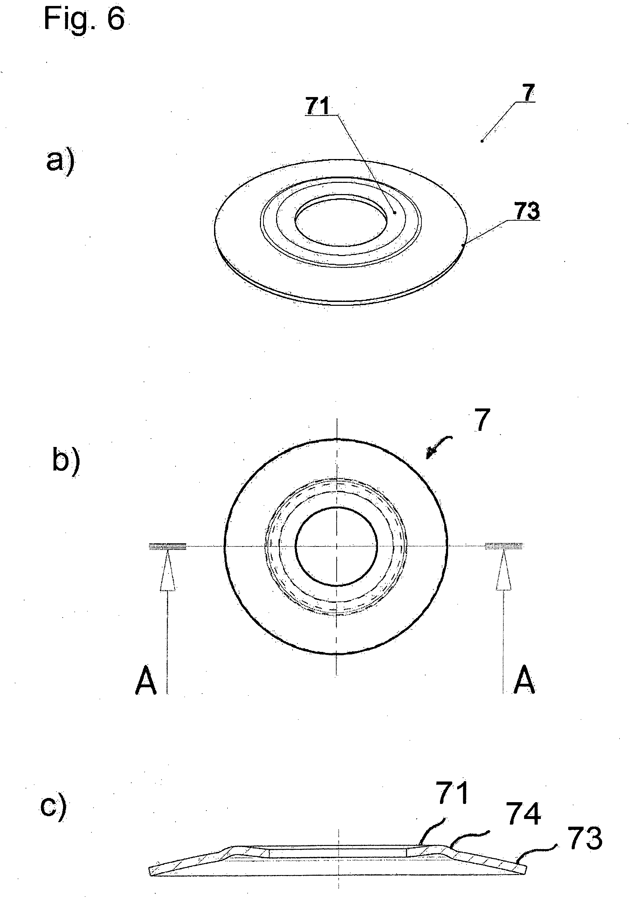

Beim weiteren Einschrauben der Mutter wird der Zwischenabschnitt 74 in Richtung des (in Figur 6 nicht dargestellten) Bauteils 2 gepresst, bis die Vorspannung der Unterlegscheibe überwunden ist und diese "auslöst", wodurch sie sprunghaft in den stabilen Zustand überführt wird. Hierbei nimmt der äußere Ringabschnitt 73 einen sich kegelförmig in Richtung des (nicht dargestellten) Bauteils erweiternden Zustand an, auf welchem Bauteil der äußere Ringabschnitt 73 mit seinem äußeren Randbereich aufliegt. Der innere Ringabschnitt 71 liegt nun nicht länger auf dem Bauteil auf, sondern ist durch den äußeren Ringabschnitt 73 gegen die (nicht dargestellte) Mutter gedrückt (vgl. Figur 6). Hierdurch ist wiederum eine Vorspannung gebildet, welche eine Kompensation von Setz- und Kriecherscheinungen der Schraubverbindung bewirkt. In diesem Ausführungsbeispiel bildet der äußere Ringabschnitt 73 gleichsam ein zuverlässiges Anzeigeelement aus, da dieser nur nach Erreichen des stabilen Zustands auf dem Bauteil aufliegt. Hierdurch ist mit dem bloßen Auge erkennbar, ob die Mutter ursprünglich mit dem erforderlichen, definierten Drehmoment bzw. mit der definierten Vorspannkraft angezogen worden ist.

Eine optische Unterstützung des hierdurch gebildeten Anzeigeelements ist dadurch erzielbar, dass der äußere Rand des äußeren Ringabschnitts 73 zumindest bereichsweise mit einem Farbreservoir versehen ist, das durch das sprunghafte Umschlagen des äußeren Ringabschnitts 73 zerstört wird, wodurch die Farbe umlaufend des äußeren Ringabschnitts austritt.

Mit der Erfindung ist eine einfache und zugleich zuverlässige Kontrolle von Schraubverbindungen ermöglicht. Durch das durch die in der Unterlegscheibe gespeicherte Vorspannung nach dem Auslösen bewirkte sprunghafte Aufklappen bzw. Aufstellen des durch den äußeren Ringabschnitt 53, 63, 73 gebildeten Anzeigeelements ist eine optische Kontrolle geschaffen, welche die Überprüfung der Schraubverbindung ohne weitere Hilfsmittel mit bloßem Auge ermöglicht. Durch den nach dem Auslösen eingenommenen stabilen Zustand des Anzeigeelements erfolgt die Anzeige dauerhaft, sodass auch zu einem Zeitpunkt, der lange nach der Erstellung der Schraubverbindung datiert und zu dem ggf. ein Nachlassen der Vorspannkraft eingesetzt hat, eine zuverlässige Kontrolle erfolgen kann, ob bei der Erstellung der Schraubverbindung die erforderliche Vorspannkraft bzw. das erfolgte Anzugsdrehmoment angelegen hat.

Das Ausführungsbeispiel gemäß der Figuren 5 und 6 birgt zudem den Vorteil, dass nach sprunghaftem Erreichen des stabilen Zustands eine Vorspannung zur zusätzlichen Sicherung der Schraubverbindung gebildet ist. Weiterhin wechselt bei der Unterlegscheibe 7 gemäß diesem Ausführungsbeispiel die Auflagefläche von innen nach außen, wodurch ein Eindringen der Unterlegscheibe 7 in die Bauteiloberfläche verhindert ist. Diese Unterlegscheibe 7 ist daher insbesondere auch für weiche Bauteilmaterialien geeignet.

## Patentansprüche

1. Vorrichtung zur Kontrolle von Schraubverbindungen, umfassend eine Unterlegscheibe zum Aufbringen auf einen Gewindebolzen, die wenigstens ein Anzeigeelement aufweist, wobei die Unterlegscheibe (5, 6, 7) im unbelasteten Zustand zumindest bereichsweise mechanisch vorgespannt ist, wodurch diese einen metastabilen Zustand aufweist, wobei die Vorrichtung durch genau eine einteilige Unterlegscheibe (5, 6, 7) gebildet ist und das Anzeigeelement durch einen radialen Abschnitt der Unterlegscheibe (5, 6, 7) gebildet ist, **dadurch gekennzeichnet, dass** ein äußerer radialer Abschnitt (53, 63, 73) gegenüber einem inneren radialen Abschnitt (51, 61, 71) vorgespannt ist, der sich entweder trichterförmig axial aus der Ebene des äußeren radialen Abschnitts (53, 63) heraus erstreckt oder mit einer größeren Steigung axial aus dem äußeren radialen Abschnitt (73) heraus erstreckt.

2. Vorrichtung nach Anspruch 1, **dadurch gekennzeichnet, dass** der radiale Abschnitt wenigstens bereichsweise eine reduzierte Materialstärke aufweist.

3. Vorrichtung nach Anspruch 1 oder 2, **dadurch gekennzeichnet, dass** der äußere Rand (54) des inneren radialen Abschnitts (51) derart verprägt ausgebildet ist, dass er eine nahezu ebene, horizontale Fläche aufweist.

4. Vorrichtung nach einem der vorgenannten Ansprüche, **dadurch gekennzeichnet, dass** eine ebene innere Ringfläche (64) angeordnet ist, an die sich ein sich axial konisch aus der Ebene der inneren Ringfläche (64) heraus erstreckender Kragen 65 anschließt, der an den inneren Ringabschnitt (61) angeformt ist, sodass durch den inneren Ringabschnitt (61) und den Kragen (65) eine ringförmig umlaufende Wölbung ausgebildet ist, die bevorzugt einen Querschnitt in Form eines auf dem Kopf stehenden V aufweist.

5. Vorrichtung nach Anspruch 1, **dadurch gekennzeichnet, dass** zwischen dem äußeren radialen Abschnitt (73) und dem inneren radialen Abschnitt (71) ein wellenförmiger Zwischenabschnitt (74) angeordnet ist, der einen Querschnitt in Form eines "liegenden S" aufweist und der zunächst entgegen der Steigung des inneren Ringabschnitts (71) verläuft und sodann über einen Wendepunkt in die Steigung des äußeren Ringabschnitts (73) übergeht.

6. Vorrichtung nach einem der vorgenannten Ansprüche, **dadurch gekennzeichnet, dass** das auf einer Seite der Unterlegscheibe (5, 6, 7) wenigstens eine bogenförmige, bevorzugt ringförmige Furche eingebracht ist, die zwischen zwei radialen Abschnitten verläuft.

7. Vorrichtung nach einem der vorgenannten Ansprüche, **dadurch gekennzeichnet, dass** die Außenkontur der Unterlegscheibe (5, 6, 7) kreis- oder ellipsenförmig ausgebildet ist.

8. Vorrichtung nach einem der vorgenannten Ansprüche, **dadurch gekennzeichnet, dass** die Unterlegscheibe (5, 6) eine Dicke von kleiner 0,8 mm, bevorzugt kleiner 0,7 mm aufweist.

9. Verfahren zur Herstellung einer vorgespannten Unterlegscheibe, wobei zunächst eine kreisförmige oder ovale ringförmige Scheibe derart verformt wird, dass sie eine innere trichterförmige Ringfläche mit einer ersten Steigung aufweist, die in einen gegenüber dem ersten Abschnitt breiteren zweiten trichterförmigen Abschnitt übergeht, der eine geringere Neigung als der erste trichterförmige Abschnitt aufweist, anschließend die so ausgebildete Scheibe mit ihrem Außenrand auf eine ebene Fläche positioniert wird und nachfolgend die innere Ringfläche derart mit einer axialen Kraft beaufschlagt wird, dass der zweite trichterförmige Abschnitt relativ zum ersten Abschnitt umklappt, wodurch das Verhältnis der Steigungen der innere Ringfläche und der äußeren Ringfläche verändert ist und wodurch die Unterlegscheibe einen metastabilen Zustand annimmt.

10. Verfahren nach Anspruch 9, **dadurch gekennzeichnet, dass** der zweite trichterförmige Abschnitt wenigstens die zweifache, bevorzugt wenigstens die vierfache, besonders bevorzugt wenigstens die fünffache Breite des ersten trichterförmigen Abschnitts aufweist.

## Claims

1. Device for controlling screwed connections, comprising a washer for mounting on a threaded bolt, which is provided with at least one indicating element, where, in the unloaded state, the washer (5, 6, 7) is mechanically pre-stressed at least in certain areas, thereby placing it in a metastable state, where the device is formed by exactly one single-part washer (5, 6, 7) and the indicating element is formed by a radial section of the washer (5, 6, 7), **characterised in that** an outer radial section (53, 63, 73) is pre-stressed with reference to an inner radial section (51, 61, 71) which extends either axially from the plane of the outer radial section (53, 63) in the form of a funnel or axially out of the outer radial section (73) at a steeper slope.

2. Device in accordance with claim 1, **characterised in that** the radial section has a reduced material thickness at least in parts.

3. Device in accordance with claim 1 or claim 2, **characterised in that** the outer edge (54) of the inner radial section (51) is stamped in such a way as to form a virtually level horizontal surface.

4. Device in accordance with any of the preceding claims, **characterised in that** a level inner ring surface (64) is arranged which a collar (65) extending axially and conically from the plane of the inner ring surface (64) adjoins, which collar is formed on the inner ring section (61) in such a way that a ring-shaped circumferential bulge is formed by the inner ring section (61) and the collar (65) whose cross-section is shaped preferably like an inverted V.

5. Device in accordance with claim 1, **characterised in that** an undulating intermediate section (74), whose cross-section has the shape of a horizontal "S", is arranged between the outer radial section (73) and the inner radial section (71) and which initially runs contrary to the slope of the inner ring section (71) and then, after a turning point, passes over into the slope of the outer ring section (73).

6. Device in accordance with any of the preceding claims, **characterised in that** at least one arc-shaped, or preferably ring-shaped groove is made on one side of the washer (5, 6, 7), which runs between two radial sections.

7. Device in accordance with any of the preceding claims, **characterised in that** the outer contour of the washer (5, 6, 7) is circular or elliptical in shape.

8. Device in accordance with any of the preceding claims, **characterised in that** the thickness of the washer (5, 6) is less than 0,8 mm or preferably less than 0,7 mm.

9. Process for manufacturing a pre-stressed washer where first of all a circular or oval ring-shaped disk is deformed in such a way that it has an inner funnel-shaped ring surface with a first slope which passes over into a second funnel-shaped section which is wider than the first section, which has a slope less steep than that of the first funnel-shaped section, where the disk thus formed is then positioned with its outer edge on a level surface and the inner ring surface subjected to an axial force in such a way that the second funnel-shaped section folds over in relation to the first section thereby altering the relation of the slopes of the inner and outer ring surfaces and causing the washer to enter a metastable state.

10. Process in accordance with claim 9, **characterised in that** the second funnel-shaped section is at least twice, preferably at least four times, or more preferably at least five times the width of the first funnel-shaped section.

## Revendications

1. Dispositif destiné au contrôle d'assemblages par vis, comprenant une rondelle à monter sur un boulon fileté, rondelle qui présente au moins un élément d'affichage, sachant que la rondelle (5, 6, 7) à l'état hors charge se trouve au moins localement sous précontrainte mécanique faisant qu'elle présente un état métastable, sachant que le dispositif est formé par exactement une rondelle (5, 6, 7) monobloc et que l'élément d'affichage est formé par un segment radial de la rondelle (5, 6, 7), **caractérisé en ce qu'**un segment (53, 63, 73) extérieur radial est précontraint par rapport à un segment (51, 61, 71) intérieur radial qui s'étend soit en forme d'entonnoir axial depuis le plan du segment (53, 63) extérieur radial, soit axialement avec une plus grande pente depuis le segment (73) extérieur radial.

2. Dispositif selon la revendication 1, **caractérisé en ce que** le segment radial présente au moins localement une moindre épaisseur de matériau.

3. Dispositif selon la revendication 1 ou 2, **caractérisé en ce que** le bord (54) extérieur du segment (51) intérieur radial est configuré gaufré de telle sorte qu'il présente une surface horizontale presque plane.

4. Dispositif selon l'une des revendications précédentes, **caractérisé en ce qu'**est disposée une surface annulaire (64) intérieure plane à laquelle se raccorde un col (65) s'étendant de façon conique selon le plan axial depuis le plan de la surface annulaire (64) intérieure, col qui est modelé contre le segment annulaire (61) intérieur de sorte que le segment annulaire (61) intérieur et le col (65) configurent une courbure annulaire périphérique qui présente de préférence une section en forme d'accent circonflexe.

5. Dispositif selon la revendication 1, **caractérisé en ce qu'**entre le segment (73) extérieur radial et le segment (71) intérieur radial est disposé un segment intermédiaire (74) ondulé présentant une section en forme de « S couché » et dont le tracé est d'abord contraire à la pente du segment annulaire (71) intérieur, puis qui via un tournant acquiert la pente du segment annulaire (73) extérieur.

6. Dispositif selon l'une des revendications précédentes, **caractérisé en ce que** sur un côté de la rondelle (5, 6, 7) est ménagé au moins un sillon arqué, de préférence annulaire, qui circule entre deux segments radiaux.

7. Dispositif selon l'une des revendications précédentes, **caractérisé en ce que** le contour extérieur de la rondelle (5, 6, 7) est configuré en forme de cercle ou d'ellipse.

8. Dispositif selon l'une des revendications précédentes, **caractérisé en ce que** la rondelle (5, 6) présente une épaisseur inférieure à 0,8 mm, de préférence inférieure à 0,7 mm.

9. Procédé de fabrication d'une rondelle précontrainte, sachant que d'abord une rondelle annulaire circulaire ou ovale est déformée de sorte à présenter une surface annulaire intérieure en forme d'entonnoir présentant une première pente, qui vient à présenter un second segment en forme d'entonnoir plus large comparé au premier segment, lequel second segment présente une inclinaison inférieure au premier segment en forme d'entonnoir, qu'ensuite le bord extérieur de la rondelle ainsi configurée est positionné sur une surface plane et qu'ensuite est appliquée à la surface annulaire intérieure une force axiale telle que le second segment en forme d'entonnoir se rabat relativement au premier segment, ce qui modifie le rapport des pentes de la surface annulaire intérieure et de la surface annulaire extérieure, et fait que la rondelle entre dans un état métastable.

10. Procédé selon la revendication 9, **caractérisé en ce que** le deuxième segment en forme d'entonnoir présente au moins deux fois, de préférence au moins quatre fois et de façon particulièrement préférentielle au moins cinq fois la largeur du premier segment en forme d'entonnoir.
